# EUROPÄISCHE PATENTSCHRIFT

(11) **EP 0 866 930 B1**
(45) Veröffentlichungstag und Bekanntmachung des Hinweises auf die Patenterteilung: **01.03.2000**
(21) Anmeldenummer: 96943037.0
(22) Anmeldetag: 05.12.1996
(51) Int. Cl.: F16H 61/06

(54) **VERFAHREN ZUR AUTOMATISIERTEN ABSTIMMUNG DES BEFÜLLVORGANGES VON SCHALTELEMENTEN**
PROCESS FOR AUTOMATICALLY CO-ORDINATING THE FILLING OPERATION OF SHIFT ELEMENTS
PROCEDE DE COORDINATION AUTOMATIQUE DE L'OPERATION DE REMPLISSAGE D'ORGANES DE COMMANDE

(30) Priorität: 12.12.1995 DE 19546292
(43) Veröffentlichungstag der Anmeldung: 30.09.1998
(73) Patentinhaber: ZF FRIEDRICHSHAFEN Aktiengesellschaft, 88038 Friedrichshafen (DE)
(72) Erfinder: STAIGER, Kai, D-88074 Meckenbeuren (DE); DREIBHOLZ, Ralf, D-88074 Meckenbeuren (DE); FROTSCHER, Gerd, D-88048 Friedrichshafen (DE)
(74) Vertreter: Zietlow, Karl-Peter
(86) Internationale Anmeldenummer: EP9605436
(87) Internationale Veröffentlichungsnummer: WO9721943

(56) Entgegenhaltungen:
- EP-A- 0 435 377
- EP-A- 0 479 737
- GB-A- 2 223 283
- RESEARCH DISCLOSURE, Nr. 359, 1.März 1994, Seite 142 XP000440538 "ADAPTIVE ELECTRONIC CONTROL OF GARAGE SHIFT IN AN AUTOMATIC TRANSMISSION"

## Beschreibung

Die Erfindung betrifft ein Verfahren zur automatisierten Abstimmung des Befüll- und Anlegevorganges von hydraulisch bzw. elektronisch einzeln ansteuerbaren Schaltelementen, deren Befüll- und Anlegevorgang in eine Schnellfüllphase und eine Füllausgleichsphase aufteilbar ist, welche als Parameter wenigstens eine Schnellfüllzeit, einen Schnellfülldruck, eine Füllausgleichszeit und einen Füllausgleichsdruck aufweisen und bei dem auf die Schnellfüllphase und die Füllausgleichsphase eine Druckanstiegsphase folgt. Ein derartiges Verfahren ist auch aus der EP 0 435 377 A2 bekannt.

Bei Automatikgetrieben mit hydraulisch betätigten Schaltelementen, welche einen Schaltkolben aufweisen, der sich in einem Kolbenraum bewegt und an ein Lamellenpaket angelegt wird, muß zur Durchführung einer Schaltung der zunächst mehr oder weniger luftgefüllte Kolbenraum mit Öl befüllt werden, bevor der Schaltkolben definiert an das Lamellenpaket angelegt wird. Dieser Befüll- und Anlegevorgang eines Schaltelementes wird üblicherweise in eine Schnellfüllphase und eine Füllausgleichsphase aufgeteilt. In der Schnellfüllphase wird das fast völlig oder teilweise leergelaufene Schaltelement mit Öl befüllt, und in der anschließenden Füllausgleichsphase wird der Schaltkolben definiert, mit geringer Last, an das Lamellenpaket angelegt.

Es ist allgemein aus umfangreichen empirischen Untersuchungen bekannt, daß die Präzision dieses Vorgangs und insbesondere ein exakt abgestimmter Anlegedruck einen sehr großen Einfluß auf die Schaltqualität haben.

In der Praxis erweist es sich bei der Abstimmung eines Getriebes immer wieder als problematisch, daß die Abstimmparameter des Befüllvorganges, bedingt durch notwendige Fertigungstoleranzen, von Getriebe zu Getriebe unterschiedlich sind. Da sich darüber hinaus die Toleranzen aufgrund von Alterung und Verschleiß mit der Zeit ändern, sind die Abstimmparameter des Befüllvorganges auch zeitabhängig.

Bei der Schnellfüllphase, welche dazu dient, den leergelaufenen bzw. teilweise leergelaufenen Kolbenraum mit Öl zu befüllen, ist beispielsweise die fertigungsbedingt notwendige Toleranz des Lüftspiels, d. h. der Weg des Schaltkolbens zu den Lamellen, neben Fertigungstoleranz als Störgröße anzusehen. Nimmt das Lüftspiel beispielsweise infolge eines Lamellenverschleisses zu, muß die Dauer der Schnellfüllphase verlängert werden, um den zusätzlichen Ölbedarf zu decken und den Anlegevorgang exakt durchzuführen.

Mit den bisherigen aus der Praxis bekannten Verfahren, den Getrieben eines Typs eine einheitliche Abstimmung zu geben, kann dies nicht in gewünschtem Maße erreicht werden.

Ebenso ist der notwendige Füllausgleichsdruck von einer Reihe von Parametern abhängig. So muß der Füllausgleichsdruck bei Verwendung von Tellerfedern beispielsweise mit zunehmender Tellerfedersteifigkeit und mit zunehmender Kolbenreibung angehoben werden, um den Schaltkolben exakt an den Lamellen anzulegen.

Auch Abweichungen von Druckreglern verschlechtern die Schaltqualität, weshalb eine Korrektur des Füllausgleichdruckes entsprechend den Druckreglerabweichungen erforderlich ist, um den Schaltkolben nach der Befüllung mit einer erforderlichen geringen Last zur Anlage an dem Lamellenpaket zu bringen.

Eine einheitliche Abstimmung der Getriebe eines Typs führt somit zwangsläufig zu Schaltungen mit geminderter Qualität.

Aus der EP 0 435 377 ist ein Verfahren zum Regeln des Wechsels von einem niedrigen Geschwindigkeitsverhältnis zu einem höheren Geschwindigkeitsverhältnis zwischen der Eingangs- und Ausgangswelle eines Automatikgetriebes mit Schaltelementen bzw. einer einrückenden und einer ausrükenden, fluiddruckbetriebenen, drehmomentübertragenden Vorrichtung bekannt. Dabei wird der Druckverlauf über der Zeit bei einem Befüll- und Anlegevorgang der hydraulisch betätigten Schaltelemente mit Hilfe eines adaptiven Schemas den Getriebebedingungen angepaßt.

Bei im wesentlichen geschlossener Motordrossel wird hierzu zunächst die ausrückende, drehmomentübertragende Vorrichtung außer Eingriff gebracht, indem ihr Betriebsdruck vor einem Wechsel bzw. einer Änderung reduziert wird, die einrückende, drehmomentübertragende Vorrichtung außer Eingriff gebracht wird, indem ein Einrück-Befehlsdruck für eine vorher definierte Füllperiode angewandt wird. Dabei wird der Einrück-Befehlsdruck auf einen anfänglichen Wert eingestellt und nachfolgend in einer Regelungsperiode mit geschlossener Schleife geregelt, um einen fortschreitenden Eingriff der einrückenden, drehmomentübertragenden Einrichtung zu bewirken. Das Auftreten einer Zunahme des Einrück-Befehlsdruckes über einen vorher bestimmten Wert während der Regelungsperiode oder eine mäßige Füllung der einrükenden Übertragungsvorrichtung wird durch das Messen einer Geschwindigkeitsabweichung festgestellt. Entsprechend dieser Feststellung wird ein erster gespeicherter Parameter eingestellt, der sich auf den Wert des anfänglichen Einrück-Befehlsdruckes bezieht, um den anfänglichen Einrück-Befehlsdruck zu erhöhen oder einen zweiten gespeicherten Parameter einzustellen, der sich auf die Länge der Füllperiode bezieht, um die Füllperiode zu verlängern.

Dieses vorgeschlagene Verfahren bietet den Vorteil, daß die Schaltqualität analysiert wird und erforderliche Anpassungen bezüglich Druck und Zeit bei der Befüllung berechnet und den nachfolgenden Schaltungen zugrunde gelegt werden, wodurch deren Qualität optimiert wird.

Nachteilhafterweise ist bei diesem bekannten Verfahren jedoch in allen Fahrzuständen eine Lernphase notwendig, um einen optimalen Schaltkomfort zu erreichen. Bei Neugetrieben, nach einem Getriebeaustausch oder nach Getriebereparaturen ist die Schaltqualität bei Anwendung dieses bekannten Abstimmverfahrens folglich anfangs beeinträchtigt.

In diesem Zusammenhang sind auch die Adaptionsverfahren nach der EP 0 435 374 und der EP 0 435 378 zu nennen, welche ebenfalls den Nachteil aufweisen, daß die Optimierung von Parametern aufgrund eines notwendigen Lernprozesses nur deutlich verzögert auf den Prozeß einwirkt.

Der Erfindung liegt daher die Aufgabe zugrunde, ein Verfahren der eingangs genannten Art zu schaffen, mit dem individuell für jedes Getriebe die Befüllung der einzelnen Schaltelemente von Anfang an mit optimalen Parametern erfolgt, um eine optimale Schaltqualität zu gewährleisten.

Diese Aufgabe wird durch die im Anspruch 1 genannten Merkmale gelöst.

Das erfindungsgemäße Verfahren bietet den Vorteil, daß die für den Befüll- und Anlegevorgang bestimmenden Parameter, nämlich die Schnellfüllzeit, der Schnellfülldruck, die Füllausgleichszeit und der Füllausgleichsdruck, individuell für jedes Getriebe und entsprechend der Toleranz der einzelnen Bauteile mit dessen Inbetriebnahme des Getriebes exakt eingestellt werden. Damit wird für jedes Getriebe eine sofortige optimale Schaltqualität gewährleistet.

Auch die Optimierung der Befüllvorgänge bei Getrieben mit relativ großen Toleranzen ist mit dem erfindungsgemäßen Verfahren problemlos möglich.

Des weiteren kann mit dem Prinzip des erfindungsgemäßen Verfahrens vorteilhafterweise anstelle einer empfindlichen und aufwendigen geregelten Lastübernahme eine gesteuerte Lastübernahme erfolgen.

Weitere Vorteile der Erfindung ergeben sich aus den Unteransprüchen und aus dem nachfolgend anhand der Zeichnung beschriebenen Ausführungsbeispiel.

Es zeigt:
- Fig. 1: ein Diagramm eines Druckverlaufes über der Zeit mit den Phasen einer Befüllung;
- Fig. 2: eine Vorgabe eines Druckregler-Stromes bzw. des theoretischen Druckverlaufes zur Ermittlung eines optimalen Füllausgleichsdruckes und
- Fig. 3: eine Vorgabe eines Druckregler-Stromes bzw. eines theoretischen Druckverlaufes zur Ermittlung einer optimalen Schnellfüllzeit.

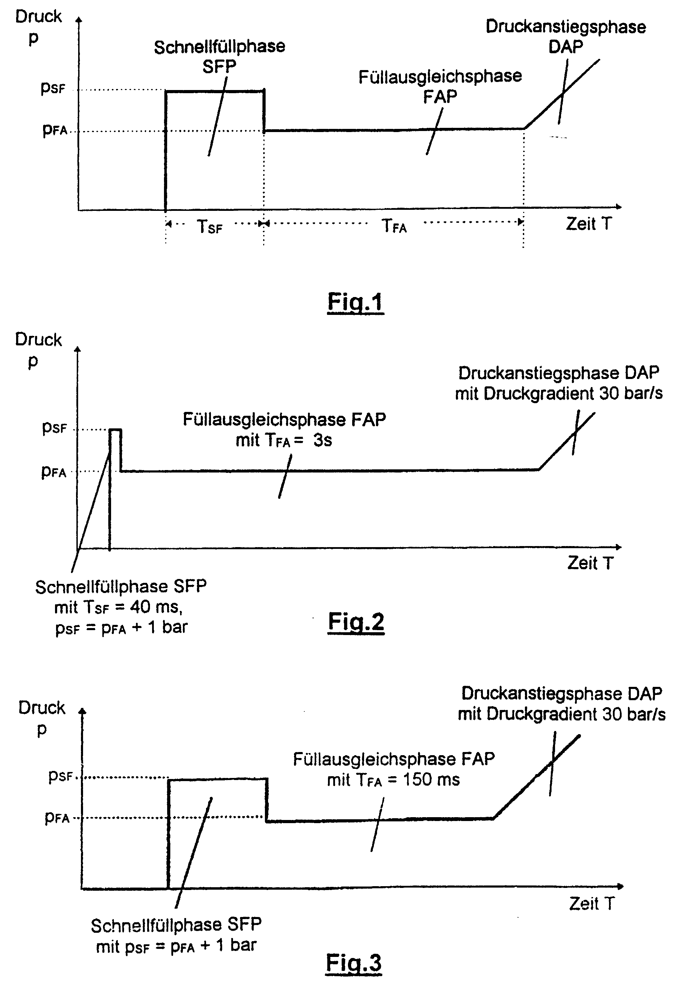

Bezug nehmend auf Fig. 1 bis 3 ist nachfolgend ein Verfahren zur automatisierten Abstimmung des Befüllvorganges von hydraulisch betätigten Schaltelementen beschrieben, wobei das Verfahren ausschließlich auf Größen wie dem Druckregler-Strom, Zeiten und verschiedenen Drehzahlen basiert, welche der Getriebesteuerung bereits bekannt sind.

Der Befüllvorgang eines Schaltelementes wird jeweils durch vier Parameter, nämlich eine Schnellfüllzeit T_SF, einen Schnellfülldruck p_SF, eine Füllausgleichszeit T_FA und einen Füllausgleichsdruck p_FA, beschrieben.

Der Befüll- und Anlegevorgang von hydraulisch betätigten Schaltelementen beginnt zunächst mit einer Schnellfüllphase SFP, die von einer Füllausgleichsphase FAP gefolgt wird. Am Ende der Füllausgleichsphase schließt sich eine Druckanstiegsphase DAP an, welche als mit der Zeit ansteigende Druckrampe wiedergegeben werden kann, wie den Figuren zu entnehmen ist.

Bezug nehmend auf Fig. 1 sind die allgemein bekannten Phasen einer Befüllung in Form eines Druckverlaufes in Abhängigkeit der Zeit wiedergegeben. Dabei wird mit Beginn der Schnellfüllphase SFP ein Schnellfülldruck p_SF aufgebracht, welcher während der gesamten Schnellfüllzeit T_SF wenigstens annähernd konstant bleibt. Am Ende der Schnellfüllphase SFP verzeichnet die Druckverlaufskurve einen Sprung und setzt sich mit dem konstant verlaufenden Füllausgleichsdruck p_FA während der gesamten sich anschließenden Füllausgleichsphase FAP, welche der Füllausgleichszeit T_FA entspricht, fort. Am Ende der Füllausgleichsphase FAP erfolgt ein konstanter Druckanstieg in der Druckanstiegsphase DAP, wobei der Übergang von der Füllausgleichsphase FAP zur Druckanstiegsphase DAP durch eine Drehzahländerung gekennzeichnet ist.

Optimalerweise ist somit das jeweilige Schaltelement mit Ende der Füllausgleichsphase FAP befüllt. Ist der Kolbenraum infolge fertigungsbedingter Toleranzen bereits während der Schnellfüllphase SFP oder in einem frühen Stadium der Füllausgleichsphase FAP befüllt, oder wird der Befüllungsvorgang erst während der Druckanstiegsphase DAP beendet, so vollzieht sich der Schaltvorgang ruckartig, was allgemein als störend empfunden wird.

Um den Schaltvorgang dahingehend zu optimieren, daß die Befüllung des Schaltelementes mit Ende der Füllausgleichsphase abgeschlossen ist, müssen die Schnellfüllzeit T_SF, der Schnellfülldruck p_SF, die Füllausgleichszeit T_FA und der Füllausgleichsdruck p_FA entsprechend optimiert werden. Hierzu werden zwei der genannten vier Parameter vorgegeben, um für die verbleibenden zwei Parameter einen optimalen Wert p_FA,opt, T_FA,opt, p_SF,opt, T_SF, opt, bestimmen zu können.

Im folgenden wird dieses Optimierungsverfahren zur Ermittlung eines optimalen Füllausgleichsdruckes p_FA,opt und einer optimalen Schnellfüllzeit T_SF,opt beschrieben.

Eine Voraussetzung zur Durchführung des Verfahrens ist, daß der Schnellfülldruck p_SF und die Füllausgleichszeit T_FA vorgegeben werden.

Außerdem ist es zweckmäßig, wenn aus Grenzmusteruntersuchungen untere und obere Grenzwerte für die zu optimierenden Parametern p_FA, T_SF bekannt sind. Diese Grenzwerte werden empirisch in Versuchen mit Getrieben, welche maximale Toleranzen oder minimale Toleranzen aufweisen, ermittelt und stellen Extremwerte mit einer äußerst schlechten Schaltqualität dar. Die unteren Grenzwerte der jeweiligen Parameter werden mit p_FA,min, T_FA,min, p_SF,min und T_SF,min bezeichnet, die empirisch ermittelten oberen Grenzwerte der Parameter tragen-entsprechend die Bezeichnungen p_FA,max, T_FA,max, p_SF,max und T_SF,max.

Eine weitere Voraussetzung zur Durchführung des Verfahrens besteht darin, daß das Schaltelement, dessen Befüllparameter festgelegt werden sollen, jeweils einzeln hydraulisch bzw. elektrisch ansteuerbar ist. Die einzelne Ansteuerbarkeit des jeweiligen Schaltelementes ist deshalb Voraussetzung, da jedes Schaltelement seine eigenen Toleranzen aufweist und auch jeweils optimal eingestellt werden soll.

Des weiteren muß sich beim Schließen dieses Schaltelementes eine meßbare und dem Schaltelement eindeutig zuordnungsbare Drehzahländerung ergeben. Der Beginn der Drehzahländerung am Übergang von der Füllausgleichsphase FAP zur Druckanstiegsphase DAP kann entweder durch eine Abweichung der Drehzahl von einem Mittelwert oder durch das Entstehen eines Drehzahlgradienten oder durch eine Kombination von beiden bestimmt werden. Gibt man beispielsweise eine konstante Motordrehzahl vor, so bestimmt diese einen konstanten Systemdruck. Erfolgt nun eine Druckänderung, so muß sich eine damit eindeutig in Zusammenhang stehende Drehzahländerung am Schaltelement einstellen. Hierzu müssen die Drehzahl und der Druckregler-Strom stets überwacht werden.

Als weitere Voraussetzung wird zudem festgelegt, um welchen Betrag der Schnellfülldruck p_SF über dem Füllausgleichsdruck p_FA zu liegen hat. Die Differenz zwischen diesen Drücken wird anhand von Vorversuchen ermittelt und wird in dem vorliegenden Ausführungsbeispiel mit 1 bar angesetzt.

Ebenfalls anhand von Vorversuchen wird als weitere Voraussetzung zur Durchführung des Verfahrens festgelegt, wie lange die Füllausgleichszeit des Schaltelementes zu sein hat. Im vorliegenden Ausführungsbeispiel wird die Füllausgleichszeit T_FA mit 150 ms festgelegt.

Zur Durchführung des Optimierungsverfahrens wird zunächst die Getriebetemperatur auf einem definierten Niveau eingestellt. Danach wird das Getriebe in einen derartigen Zustand gebracht, daß sich beim Schließen des einzustellenden Schaltelementes eine meßbare Drehzahländerung einstellt. Hierzu können beispielsweise weitere Schaltelemente geschlossen werden, so daß beim Schließen des einzustellenden Schaltelementes ein Gang eingelegt wird, im Getriebe eine Blockierung eintritt oder ein Getriebeelement hochtourig gefahren wird. Durch das Öffnen der anderen Schaltelemente wird eine Seite des einzustellenden Schaltelementes auf eine definierte Ausgangsdrehzahl gebracht. Auf der anderen Seite des Schaltelementes, auf der sich der vorgegebene Druck auswirkt, muß die Drehzahl meßbar sein.

Des weiteren wird die Motordrehzahl so weit angehoben, daß ein Einfluß des Systemdrucks beim Befüllen des Schaltelementes ausgeschlossen ist. Hierzu wird die Motordrehzahl auf einen Betrag von beispielsweise über 1 500 U/min gebracht.

Bezug nehmend auf Fig. 2 wird nun zur Ermittlung des Füllausgleichsdruckes p_FA ein theoretischer Druckverlauf bzw. Druckregler-Strom vorgegeben, welcher eine sehr kurze Schnellfüllphase SFP mit etwa 40 ms aufweist, um die Hysterese der Druckregler so wie bei einer realen Schaltung einzustellen. Der Schnellfülldruck p_SF soll um 1 bar über dem Füllausgleichsdruck p_FA liegen. Für die Füllausgleichsphase FAP wird ein langer Zeitabschnitt von 3 s Dauer angenommen. Die Höhe des zu optimierenden Füllausgleichsdruckes p_FA bleibt variabel.

Die Druckrampe bzw. die Druckanstiegsphase DAP weist einen Gradienten von 30 bar/s entsprechend den schnellsten Druckrampen bei Schaltungen auf.

Zur Ermittlung des optimalen Füllausgleichdruckes p_FA,opt wird nun ein Druckregler gemäß dem vorgegebenen Druckregler-Strom nach Fig. 2 angesteuert.

Zunächst wird für den Füllausgleichsdruck bzw. den dazugehörenden Strom ein Anfangswert p_FA,a angesetzt, welcher niedriger ist als der vorher empirisch ermittelte untere Grenzwert p_FA,min. In diesem Falle muß dann die Drehzahländerung nach dem Beginn der Druckanstiegsphase DAP bzw. Druckregler-Strom-Rampe erfolgen. Tritt beim Übergang von der Füllausgleichsphase FAP zur Druckanstiegsphase DAP bzw. nach dem Beginn der Druckanstiegsphase DAP keine Drehzahländerung auf, ist das Schaltelement oder dessen Ansteuerung defekt.

Je nach zu optimierenden Parametern wird also unabhängig von dem beschriebenen Ausführungsbeispiel ein Anfangswert p_FA,a T_FA,a, p_SF,a, T_SF,a vorgegeben, welcher zweckmäßigerweise kleiner als der jeweils empirisch ermittelte untere Grenzwert p_FA,min, T_FA,min, p_SF,min, T_SF,min ist, jedoch ist dies keine zwingende Voraussetzung zur Durchführung des Optimierungsverfahrens.

Wieder Bezug nehmend auf die Optimierung des Füllausgleichsdruckes p_FA gemäß Fig. 2 wird nun der Anfangswert p_FA,a des Füllausgleichdruckes schrittweise in Intervallen von 0,1 bis 0,2 bar angehoben, wobei die Drehzahländerung immer früher erfolgt. Anfangs tritt die Drehzahländerung noch während der Druckanstiegsphase DAP bzw. Druckregler-Strom-Rampe auf, was bedeutet, daß der eingestellte Füllausgleichsdruck p_FA noch zu niedrig ist. Bei einem bestimmten Füllausgleichsdruck p_FA,opt erfolgt die Drehzahländerung vor oder mit dem Beginn der Druckanstiegsphase DAP vor dem Einsetzen der Druckregler-Strom-Rampe. Der Füllausgleichsdruck ist der Druck, bei dem zum ersten Mal die Drehzahländerung mit Beginn der Druckanstiegsphase oder vorher erfolgt.

Liegt der ermittelte optimale Füllausgleichsdruck p_FA,opt über dem vorher empirisch ermittelten oberen Grenzwert p_FA,max für den Füllausgleichsdruck p_FA, so ist jedoch das Schaltelement oder dessen Ansteuerung möglicherweise defekt, auf jeden Fall außerhalb der zulässigen Toleranz.

Entsprechendes gilt allgemein, wenn ein jeweils ermittelter optimaler Parameter p_FA,opt, T_FA,opt, p_SF,opt, T_SF,opt über dem entsprechenden empirisch ermittelten oberen Grenzwert p_FA,max, T_FA,max, p_SF,max bzw. T_SF,max liegt.

Zu den vorgegebenen Parametern Schnellfülldruck p_SF und Füllausgleichszeit T_FA sowie dem ermittelten optimalen Füllausgleichsdruck p_FA wird nun die optimale Schnellfüllzeit T_SF ermittelt.

Hierzu wird gemäß Fig. 3 ein theoretischer Druckverlauf bzw. Druckregler-Strom mit einer Schnellfüllphase SFP von variabler Dauer, mit einem Schnellfülldruck p_SF, der um 1 bar höher ist als der Füllausgleichsdruck p_FA, mit einer Füllausgleichsphase, deren Füllausgleichszeit z. B. T_FA 150 ms beträgt, und mit einer Druckanstiegsphase, welche eine Druckrampe mit einem Gradienten von 30 bar/s entsprechend den schnellsten Druckrampen bei Schaltungen aufweist, vorgegeben.

Mit den vorgegebenen Parametern p_SF, T_FA und dem ermittelten optimalen Füllausgleichsdruck p_FA,opt wird nun zunächst ein Anfangswert T_SF,a angesetzt, welcher wiederum zweckmäßigerweise kleiner als der empirisch ermittelte untere Grenzwert T_SF,min ist. Die Drehzahländerung muß nun nach dem Beginn der Druckanstiegsphase DAP erfolgen, ansonsten ist das Schaltelement oder dessen Ansteuerung defekt.

Analog zu der zuvor beschriebenen Ermittlung des optimalen Füllausgleichsdruckes p_FA,opt wird der Wert für die Schnellfüllzeit T_SF schrittweise in Intervallen angehoben, wobei die Drehzahländerung immer früher erfolgt. Die Drehzahländerung tritt dabei zunächst noch während der Druckanstiegsphase auf, was bedeutet, daß die eingestellte Schnellfüllzeit T_SF noch zu kurz ist. Bei einer bestimmten Füllausgleichszeit T_SF,opt erfolgt die Drehzahländerung gleichzeitig bzw. annähernd gleichzeitig mit dem Beginn der Druckanstiegsphase DAP und stellt somit die optimale Füllausgleichszeit für das Schaltelement dar.

Liegt die ermittelte optimale Schnellfüllzeit T_SF über dem vorher empirisch ermittelten oberen Grenzwert T_SF,max, ist davon auszugehen, daß das Schaltelement oder dessen Ansteuerung möglicherweise defekt, auf jeden Fall außerhalb der zulässigen Toleranz ist.

Analog zu dem beschriebenen Verfahren können anstelle der Schnellfüllzeit T_SF und des Füllausgleichsdruckes p_FA selbstverständlich auch die Parameter Schnellfülldruck p_SF und Füllausgleichszeit T_FA optimiert werden.

Bei Fahrzeuginspektionen wird dieses Verfahren zweckmäßigerweise bei blockiertem bzw. stehendem Getriebeabtrieb durchgeführt. Das Verfahren läßt sich somit sowohl auf einem Getriebeprüfstand nach der Getriebefertigung am Band unmittelbar nach der Getriebefertigung als auch bei Inspektionen eines Pkw in der Werkstatt einsetzen.

In einer anderen Ausführungsform kann das Verfahren jedoch selbstverständlich auch mit laufendem Getriebeabtrieb, beispielsweise während der Fahrt, durchgeführt werden.

## Patentansprüche

1. Verfahren zur automatisierten Abstimmung des Befüll- und Anlegevorganges von hydraulisch betätigbaren und hydraulisch bzw. elektronisch einzeln ansteuerbaren Schaltelementen, deren Befüll- und Anlegevorgang nach einem zeitabhängigen Druckverlauf mit einer Schnellfüllphase(SFP) und einer Füllausgleichsphase (FAP) und einer Druckanstiegsphase (DAP) erfolgt und als Parameter wenigstens eine Schnellfüllzeit (T_SF), ein Schnellfülldruck (p_SF), eine Füllausgleichszeit (T_FA) und ein Füllausgleichsdruck (p_FA) herangezogen werden, dadurch **gekennzeichnet,** daß zur Optimierung der Parameter (T_SF, p_SF, T_FA, p FA) zwei Parameter vorgegeben werden und für die anderen zwei Parameter innerhalb des zeitabhängigen Druckverlaufes ein optimaler Wert (p_FA,opt, T_FA,opt, p_SF,opt, T_SF,opt) des ersten zu optimierenden Parameters derart bestimmt wird, daß, ausgehend von einem jeweiligen vorgebbaren Anfangswert (p_FA,a, T_FA,a, p_SF,a, T_SF,a), dieser Wert schrittweise so lange verändert wird, bis eine Drehzahländerung mit Beginn der Druckanstiegsphase (DAP) erfolgt und der weitere zu optimierende Parameter bestimmt wird, daß bei dem optimalen Wert (p_FA,opt, T_FA,opt, p_SF,opt, T_SF,opt) des ersten zu optimierenden Parameters und ausgehend von dem jeweiligen vorgebbaren Anfangswert (p_FA,a, T_FA,a, p_SF,a, T_SF,a) dieser Parameter schrittweise so lange verändert wird, bis eine Drehzahländerung wenigstens annähernd gleichzeitig mit dem Beginn der Druckanstiegsphase DAP erfolgt.

2. Verfahren nach Anspruch 1, dadurch **gekennzeichnet,** daß die vorgebbaren Anfangswerte (p_FA,a, T_FA,a, p_SF,a, T_SF,a) jeweils empirisch ermittelte Grenzwerte (p_FA,max, T_FA,max, p_SF,max, T_SF,max) sind.

3. Verfahren nach Anspruch 1 oder 2, dadurch **gekennzeichnet,** daß das Schaltelement oder dessen Ansteuerung als defekt erkannt wird, wenn
a) bei der Anhebung eines Parameterwertes zur Ermittlung des jeweils optimalen Wertes (p_FA,opt, T_FA,opt, p_SF,opt, T_SF,opt) nach dem Beginn der Druckanstiegsphase (DAP) keine Drehzahländerung erfolgt und/oder
b) der ermittelte optimale Wert (p_FA,opt, T_FA,opt, p_SF,opt, T_SF,opt) außerhalb eines jeweils empirisch ermittelten Toleranzbereichs (p_FA,min, T_FA,min, p_SF,min, T_SF,min) liegt.

4. Verfahren nach Anspruch 1, 2 oder 3, dadurch **gekennzeichnet,** daß beim Schließen des jeweiligen Schaltelementes eine meßbare und diesem Schaltelement eindeutig zuordnungsbare Drehzahländerung erfolgt.

5. Verfahren nach einem der Ansprüche 1 bis 4, dadurch **gekennzeichnet,** daß die Drehzahländerung durch eine Abweichung der Drehzahl von einem Mittelwert und/oder durch das Entstehen eines Drehzahlgradienten bestimmt wird.

6. Verfahren nach einem der Ansprüche 1 bis 5, dadurch **gekennzeichnet,** daß die Parameter (T_SF, p_SF, T_FA, p_FA) bei einer definierten Getriebetemperatur optimiert werden.

7. Verfahren nach einem der Ansprüche 1 bis 6, dadurch **gekennzeichnet** , daß die vorgegebenen zwei der vier Parameter (T_SF, p_SF, T_FA, p_FA) empirisch ermittelt werden.

8. Verfahren nach einem der Ansprüche 1 bis 7, dadurch **gekennzeichnet,** daß der Wert des Schnellfülldruckes (p_SF) so gewählt wird, daß er um einen vordefinierten Betrag über dem des Füllausgleichsdruckes (p_FA) liegt.

9. Verfahren nach einem der Ansprüche 1 bis 8, dadurch **gekennzeichnet,** daß zur Optimierung der Parameter (T_SF, p_SF, T_FA, p_FA) die Drehzahl eines mit den Schaltelementen zusammenwirkenden Motors so weit angehoben wird, daß ein Systemdruckeinfluß ausgeschlossen ist.

10. Verfahren nach einem der Ansprüche 1 bis 9, dadurch **gekennzeichnet,** daß ein mit den Schaltelementen zusammenwirkender Getriebeabtrieb während des Optimierens der Parameter blockiert wird.

## Claims

1. A method for automatically co-ordinating the filling and application operation of shift elements which can be hydraulically operated and hydraulically or electronically individually actuated and whose filling and application operation is effected as a function of a time-dependent pressure course with a rapid filling phase (SFP) and a filling balancing phase (FAP) and a pressure increase phase (DAP), and at least one rapid filling time (T_SF), a rapid filling pressure (p_SF), a filling balancing time (T_FA) and a filling balancing pressure (p_FA) are used as parameters, characterised in that, in order to optimise the parameters (T_SF, p_SF, T_FA, p_FA), two parameters are predetermined and for the other two parameters within the time-dependent pressure course an optimum value (p_FA,opt, T_FA,opt, p_SF,opt, T_SF,opt) of the first parameter which is to be optimised is determined in such a manner that, proceeding from a respective predeterminable starting value (p_FA,a, T_FA,a, p_SF,a, T_SF,a), this value is varied in stages until a rotational speed change occurs at the start of the pressure increase phase (DAP) and the further parameter which is to be optimised is determined, in that at the optimum value (p_FA,opt, T_FA,opt, p_SF,opt, T_SF,opt) of the first parameter which is to be optimised and proceeding from the respective predeterminable starting value (p_FA,a, T_FA,a, p_SF,a, T_SF,a), this parameter is varied in stages until a rotational speed change occurs at least approximately simultaneously with the start of the pressure increase phase (DAP).

2. A method according to claim 1, characterised in that the predeterminable starting values (p_FA,a, T_FA,a, p_SF,a, T_SF,a) are each empirically determined threshold values (p_FA,max, T_FA,max, p_SF,max, T_SF,max).

3. A method according to claim 1 or 2, characterised in that the shift element or its actuation is recognised as defective if
a) there is no rotational speed change with the increase in a parameter value in order to determine the respective optimum value (p_FA,opt, T_FA,opt, p_SF,opt, T_SF,opt) after the start of the pressure increase phase (DAP) and/or
b) the determined optimum value (p_FA,opt, T_FA,opt, p_SF,opt, T_SF,opt) lies outside a respective empirically determined tolerance range (p_FA,min, T_FA,min, p_SF,min, T_SF,min).

4. A method according to claim 1, 2 or 3, characterised in that, when the respective shift element is closed, a measurable rotational speed change occurs, which can be clearly associated with this shift element.

5. A method according to one of claims 1 to 4, characterised in that the rotational speed change is determined by a deviation in the rotational speed from a mean value and/or by the production of a rotational speed gradient.

6. A method according to one of claims 1 to 5, characterised in that the parameters (T_SF, p_SF, T_FA, p_FA) are optimised at a defined transmission temperature.

7. A method according to one of claims 1 to 6, characterised in that the predetermined two of the four parameters (T_SF, p_SF, T_FA, p_FA) are empirically determined.

8. A method according to one of claims 1 to 7, characterised in that the value of the rapid filling pressure (p_SF) is selected in such a manner it lies above that of the filling balancing pressure (p_FA) by a predefined amount.

9. A method according to one of claims 1 to 8, characterised in that, for the optimisation of the parameters (T_SF, p_SF, T_FA, p_FA), the rotational speed of a motor cooperating with the shift elements is increased to such an extent that a system pressure influence is ruled out.

10. A method according to one of claims 1 to 9, characterised in that a transmission output cooperating with the shift elements is blocked during the optimisation of the parameters.

## Revendications

1. Procédé pour la synchronisation automatique du processus de remplissage et d'application d'éléments pouvant être activés de façon hydraulique et à commande individuelle hydraulique, respectivement électronique, dont le processus de remplissage et d'application d'éléments est effectué selon une variation de la pression en fonction du temps avec une phase de remplissage rapide (SFP) et une phase d'égalisation de remplissage (FAP) et une phase de montée de pression (DAP), utilisant comme paramètres au moins un temps de remplissage rapide (T_SF), une pression de remplissage rapide (p_SF), un temps d'égalisation de remplissage (T_FA) et une pression d'égalisation de remplissage (p_FA), **caractérisé** en ce que, pour l'optimisation des paramètres (T_SF, p_SF, T_FA, p_FA), deux paramètres sont prédéterminés et, pour les deux autres paramètres, à l'intérieur de la variation de la pression en fonction du temps, une valeur optimale (p_FA,opt, T_FA,opt, P_SF,opt, T_SF,opt) du premier paramètre à optimiser est définie de telle façon qu'en partant d'une valeur initiale qui peut être prédéterminée (p_FA,a, T_FA,a, p_SF,a, T_SF,a) cette valeur est modifiée par pas jusqu'à ce qu'un changement de la vitesse de rotation se produise avec le début de la phase de montée de la pression (DAP), et l'autre paramètre à optimiser est déterminé de façon qu'avec la valeur optimale (p_FA,opt, T_FA,opt, p_SF,opt, T_SF,opt) du premier paramètre à optimiser et à partir de la valeur initiale qui peut être prédéterminée (p_FA,a, T_FA,a, p_SF,a, T_SF,a), ce paramètre est modifié par pas jusqu'à ce qu'un changement de la vitesse de rotation se produise au moins à peu près simultanément avec le début de la phase de montée de pression DAP.

2. Procédé selon la revendication 1, **caractérisé** en ce que les valeurs initiales qui peuvent être prédéterminées (p_FA,a, T_FA,a, p_SF,a, T_SF,a) sont chaque fois des valeurs limites déterminées de façon empirique (p_FA,max, T_FA,max, p_SF,max, T_SF,max).

3. Procédé selon la revendication 1 ou 2, **caractérisé** en ce que l'élément de commande ou l'activation de celui-ci est reconnu comme défectueux lorsque
a) lors de l'augmentation d'une valeur de paramètre pour la détermination de la valeur optimale (p_FA,opt, T_FA,opt, p_SF,opt, T_SF,opt), après le début de la phase de montée de pression (DAP), aucun changement de la vitesse de rotation n'a lieu et/ou
b) la valeur optimale déterminée (p_FA,opt, T_FA,opt, p_SF,opt, T_SF,opt) se situe en dehors d'une plage de tolérances déterminée de façon empirique (p_FA,min, T_FA,min, p_SF,min, T_SF,min).

4. Procédé selon la revendication 1, 2 ou 3, **caractérisé** en ce que, lors de la fermeture de l'élément de commande concerné, un changement de la vitesse de rotation mesurable et clairement affectable se produit dans cet élément de commande.

5. Procédé selon l'une des revendications 1 à 4, **caractérisé** en ce que le changement de la vitesse de rotation est déterminé par une différence entre la vitesse de rotation et une valeur moyenne et/ou par l'apparition d'un gradient de vitesse de rotation.

6. Procédé selon l'une des revendications 1 à 5, **caractérisé** en ce que les paramètres (T_SF, p_SF, T_FA, p_FA) sont optimisés à une température définie de la transmission.

7. Procédé selon l'une des revendications 1 à 6, **caractérisé** en ce que les deux paramètres qui peuvent être prédéterminés parmi les quatre paramètres (T_SF, p_SF, T_FA, p_FA) sont déterminés de façon empirique.

8. Procédé selon l'une des revendications 1 à 7, **caractérisé** en ce que la valeur de la pression du remplissage rapide (p_SF) est choisie de telle façon qu'elle se situe à une valeur prédéfinie au dessus de la pression d'égalisation de remplissage (p_FA).

9. Procédé selon l'une des revendications 1 à 8, **caractérisé** en ce que, pour l'optimisation des paramètres (T_SF, p_SF, T_FA, p_FA), la vitesse de rotation d'un moteur concourant avec les éléments de commande est augmentée à un niveau tel qu'une influence par la pression du système est exclue.

10. Procédé selon l'une des revendications 1 à 9, **caractérisé** en ce qu'une sortie de la boîte de vitesses concourant avec les éléments de commande est bloquée durant l'optimisation des paramètres.
